# EUROPÄISCHE PATENTSCHRIFT

(11) **EP 0 615 829 B1**
(45) Veröffentlichungstag und Bekanntmachung des Hinweises auf die Patenterteilung: **17.06.1998**
(21) Anmeldenummer: 94103960.4
(22) Anmeldetag: 15.03.1994
(51) Int. Cl.: B29C 47/68

(54) **Trennvorrichtung**
Filter device
Dispositif de filtrage

(30) Priorität: 18.03.1993 DE 4308685
(43) Veröffentlichungstag der Anmeldung: 21.09.1994
(73) Patentinhaber: Gail, Josef, D-86551 Aichach-Unterwittelsbach (DE)
(72) Erfinder: Gail, Josef, D-86551 Aichach-Unterwittelsbach (DE)
(74) Vertreter: Liska, Horst, Dr.-Ing.

(56) Entgegenhaltungen:
- EP-A- 0 078 064
- EP-A- 0 411 163
- DE-A- 3 505 667
- DE-U- 9 216 390

## Beschreibung

Die Erfindung betrifft eine Vorrichtung zum Trennen von Materialien unterschiedlicher Konsistenz, insbesondere zum Trennen von Thermoplastkunststoff-Feststoff-Gemischen oder Gemischen aus unterschiedlich schmelzbaren Kunststoffen.

Bei einer Vielzahl von Herstellungsprozessen fallen große Mengen Abfallmaterial aus thermoplastischem Kunststoff an. Kunststoffabfalle, beispielsweise aus der Verpackungsindustrie oder der Kabelindustrie, sind jedoch vielfach durch Metallabfälle, wie z.B. Metallfolien oder Drahtabfälle, verunreinigt. Um den durch Erwärmen plastifizierbaren, thermoplastischen Kunststoff wieder verwenden zu können, müssen die Verunreinigungen abgetrennt werden. Aus EP-B0 078 064 ist eine Trennvorrichtung bekannt, die das zu reinigende thermoplastische Kunststoffmaterial plastifiziert und durch einen als Rohr ausgebildeten, mit radialen Filterlöchern versehenen Filterkörper drückt. In dem Filterkörper rotiert eine Schaberwelle mit mehreren federnd gegen den Innenmantel des Filterkörpers gespannten Schabern die den Filterkörper kontinuierlich reinigen. Während das Abfallmaterial über einen Auslaß mit Rückstaueigenschaften aus dem Inneren des Filterkörpers abgeführt wird, wird das gereinigte Kunststoffmaterial an der Außenseite des Filterkörpers abgeführt.

Der Durchmesser der Filterlöcher muß, wenn eine hinreichend saubere Trennung der Materialien erreicht werden soll, vergleichsweise klein gewählt werden und liegt beispielsweise bei 80 bis 200 µm. Der kleine Lochdurchmesser bedingt andererseits hohe Arbeitsdrücke, die zum Beulen des auf seiner Außenseite mit Abführkanälen versehenen und damit nur bereichsweise abgestützten Filterkörpers führen. Bei der bekannten Trennvorrichtung hat deshalb der Filterkörper im Bereich seiner Filterlöcher nur eine Wandstärke von maximal dem 10-fachen des Lochdurchmessers, um die Drosselwirkung der Filterlöcher zu begrenzen. Da jedoch die geringe Wandstärke des Filterkörpers im Bereich seiner Filterlöcher den Preßdruck ohne Deformation nicht aushalten würde, wird in der EP-B-78 064 vorgeschlagen, die Filterlöcher am Boden von beispielsweise ring- oder schraubenwendelförmig den Filterkörper umgebenden Vertiefungen im Außenmantel des Filterkörpers vorzusehen. Der Filterkörper erhält auf diese Weise integral angeformte Erhebungen, über die er sich am Gehäuse der Trennvorrichtung abstützen kann und die zur Aussteifung der vergleichsweise dünnen Böden der Vertiefungen mit beitragen.

Wenngleich die bekannte Trennvorrichtung in der Regel zufriedenstellend arbeitet, kann es aufgrund der Doppelbelastung des Filterkörpers durch die Schaber einerseits und durch den Druck des Kunststoffmaterials andererseits im Einzelfall zu erhöhtem Verschleiß kommen.

Aus EP-A-144 495 ist eine weitere Trennvorrichtung bekannt, die die Belastung ihres rohrförmigen und ebenfalls mit radialen Filteröffnungen versehenen Filterkörpers dadurch zu verringern versucht, daß anstelle von Schabern, die am Innenmantel des Filterkörpers anliegen, im Inneren des Filterkörpers eine hohle und mit radialen Ausgleichsbohrungen versehene Förderschnecke angeordnet ist, die jedoch nicht am Filterkörper streift, sondern lediglich örtliche Druckspitzen in dem plastifizierten Kunststoffmaterial abbaut. Auch bei dieser Trennvorrichtung beträgt die Länge der Filterlöcher maximal das 10-fache ihres Durchmessers, wobei jedoch die Filterlöcher sich konisch nach außen hin erweitern. Werden sehr kleine Lochdurchmesser angestrebt, wo würde dies sehr geringe Wandstärken des Filterkörpers bedingen, mit der Folge nur begrenzter mechanischer Festigkeit des Filterkörpers.

Bei der aus der EP-B-0 078 064 bekannten Trennvorrichtung sind die Filterlöcher am Boden von dem rohrförmigen Filterkörper in Umfangsrichtung, beispielsweise schraubenwendelförmig umschließenden Nuten im Außenmantel des Filterkörpers vorgesehen. Die Nuten bilden damit Stützrippen, über die sich der Filterkörper am Innenmantel eines umschließenden Gehäuserohrs abstützt. Bei der bekannten Trennvorrichtung sind die das gereinigte Kunststoffmaterial abführenden axialen Kanäle als axiale Nuten in dem Gehäuserohr ausgebildet. Diese axialen Kanäle müssen für Trennvorrichtungen größerer Leistung einen vergleichsweise großen Querschnitt haben, der sich aber mit den bekannten Konstruktionen nicht realisieren läßt, da das Gehäuserohr den vergleichsweise dünnwandigen Filterkörper radial stützen muß.

Es ist deshalb Aufgabe der Erfindung eine Trennvorrichtung zu schaffen, die es erlaubt auch bei hoher Trennleistung den Filterkörper hinreichend radial zu stützen.

Die Erfindung geht von der aus der EP-B-78064 bekannten Trennvorrichtung aus, die folgende Merkmale umfaßt:
ein Gehäuse,
einen in einer angenähert zylindrischen Kammer des Gehäuses angeordneten hohlzylindrischen Filterkörper aus einem rohrförmigen Materialstück mit den Filterkörper radial durchdringenden Filterlöchern, einer in dem Gehäuse gelagerten, gleichachsig zum Filterkörper drehend angetriebenen Schaberwelle, welche den Filterkörper unter Bildung eines Ringraums axial durchsetzt und an ihrem Mantel wenigstens einen zum Filterkörper radial vorstehenden, federnd an dem Filterkörper anliegenden Schaber trägt,
eine das Materialgemisch unter Druck in den Ringraum einführende Fördereinrichtung,
den Filterkörper umschließende Stützmittel, die den Filterkörper über Stützrippen radial abstützen und die eine Vielzahl über den Umfang des Filterkörpers verteilte, angenähert axial verlaufende, erste Kanalabschnitte sowie zwischen den Stützrippen gelegene, quer zu den ersten Kanalabschnitten verlaufende, zweite Kanalabschnitte bilden, wobei die Stützrippen einstückig an dem Filterkörper angeformt sind und die ersten Kanalabschnitte in einem Stützrohr vorgesehen sind, in welchem der Filterkörper koaxial sitzt,
einen über die ersten und die zweiten Kanalabschnitte mit der Außenseite des Filterkörpers verbundenen, ersten Materialauslaß, und
einen mit der Innenseite des Filterkörpers verbundenen zweiten Materialauslaß mit Rückstaueigenschaft.

Die erfindungsgemäße Verbesserung wird dadurch erreicht, daß die ersten Kanalabschnitte durch im wesentlichen axiale, in der Wand des Stützrohrs verlaufende Bohrungen gebildet sind, von denen jede durch einen längs der Bohrung sich erstreckenden Schlitz mit der Innenseite des Stützrohrs verbunden ist und daß der Durchmesser jeder Bohrung größer als die Breite des zugehörigen Schlitzes ist.

Auf diese Weise wird erreicht, daß das Stützrohr großflächig an den quer zu den Schlitzen verlaufenden Stützrippen des Filterkörpers anliegt. Die Schlitze können verhältnismäßig schmal gehalten werden, da sie aufgrund ihrer geringen Tiefe den Abfluß des durch den Filterkörper tretenden Materials nur wenig behindern. Die Schlitztiefe ist in jedem Fall kleiner als der Durchmesser der Bohrungen, die aufgrund ihrer Größe für einen weitgehend ungehinderten Abfluß des Materials sorgen.

Es hat sich gezeigt, daß die Wandstärke des Filterkörperrohrs beträchtlich über bisherige Bemessungsbegrenzungen hinaus erhöht werden kann, beispielsweise auf das 15- bis 30-fache eines Lochdurchmessers von 130 bis 200 µm, wenn die Löcher nur an ihrem radial inneren Ende den gewünschten kleinen Lochdurchmesser haben, sich zu ihrem radial äußeren Ende hin jedoch erweitern. Auf diese Weise können Filterkörperrohre mit einer Wandstärke von 3 bis 6 mm verwendet werden, die auch höheren Drücken ohne zu beulen widerstehen.

Dadurch, daß sich die Filterlöcher vom Inneren des Filterkörpers her nach außen insbesondere konisch oder stufenförmig erweitern, wird die Drosselwirkung der Filterlöcher gering gehalten. Auch hier sind die zweiten Kanalabschnitte bevorzugt in Form wenigstens einer Schraubenwendel angeordnet. Das Stützrohr kann in der Kammer des Gehäuses radial abgestützt sein kann oder aber einen integralen Bestandteil des Gehäuses bilden.

Die Trennleistung der Vorrichtung wird u.a. durch die Oberflächengröße des Filterkörpers bestimmt. Da der Durchmesser des Filterkörpers aus Festigkeitsgründen nicht beliebig vergrößert werden kann, sind Filterkörper hoher Trennleistung in axialer Richtung vergleichsweise lang. In einer zweckmäßigen Ausgestaltung ist deshalb vorgesehen, daß sich die axial verlaufenden Bohrungen zum ersten Materialauslaß hin beispielsweise konisch erweitern.

Konische Bohrungen bedingen jedoch einen vergleichsweise großen Herstellungsaufwand, insbesondere wenn es sich um längere Bohrungen handelt. Bei einer bevorzugten Ausgestaltung ist vorgesehen, daß das Stützrohr aus mehreren gleichachsig hintereinander angeordneten, voneinander separierbaren Rohrabschnitten mit gleichem Innendurchmesser zusammengesetzt ist und daß sich die ersten Kanalabschnitte durch die Rohrabschnitte hindurch erstrecken und in den einzelnen Rohrabschnitten eine längs des Rohrabschnitts im wesentlichen gleichbleibende, von Rohrabschnitt zu Rohrabschnitt zum ersten Materialauslaß hin jedoch zunehmende Querschnittsfläche haben. Die einzelnen Rohrabschnitte lassen sich damit einfacher als bisher herstellen und zwar selbst dann, wenn die ersten Kanalabschnitte lediglich durch Nuten im Außenmantel des Stützrohrs gebildet sind, da dann die Nuten des Rohrabschnitts konstante Tiefe bei gleichbleibendem Außendurchmesser des Rohrabschnitts haben können. Soweit die ersten Kanalabschnitte durch Bohrungen gebildet werden, können die Bohrungen zylindrisch sein; es genügt, wenn der Durchmesser von Rohrabschnitt zu Rohrabschnitt zum ersten Materialauslaß hin zunimmt. Die Bohrungen benachbarter Rohrabschnitte sind bevorzugt gegeneinander radial versetzt und haben im wesentlichen gleichen lichten Abstand vom Zentrum des Stützrohrs. Auf diese Weise haben die längs des Stützrohrs über die Rohrabschnitte hinweg sich erstreckenden Schlitze im wesentlichen gleiche Tiefe.

Im folgenden soll die Erfindung anhand einer Zeichnung näher erläutert werden. Hierbei zeigt:
- Fig. 1: einen teilweisen, schematischen Axiallängsschnitt durch eine Trennvorrichtung an der Erfindung; verwirklicht werden kann;
- Fig. 2: einen Axialquerschnitt durch die Trennvorrichtung, gesehen entlang einer Linie II-II in Fig. 1;
- Fig. 3: eine aufgebrochene Teilansicht der Vorrichtung, gesehen entlang einer Linie III-III in Fig. 1;
- Fig. 4: einen Detailschnitt durch eine Filterkörper der Vorrichtung;
- Fig. 5: einen Detailschnitt durch eine Variante des Filterkörpers;
- Fig. 6: einen teilweisen, schematischen Axiallängsschnitt durch eine gemäß der Erfindung abgewandelte Trennvorrichtung nach Fig. 1, gesehen entlang einer Linie VI - VI in Fig. 7;
- Fig. 7: einen teilweisen Axialquerschnitt durch die Trennvorrichtung, gesehen entlang einer Linie VII - VII in Fig. 6 und
- Fig. 8: einen teilweisen, schematischen Axiallängsschnitt durch eine Variante der Trennvorrichtung nach Fig. 6.

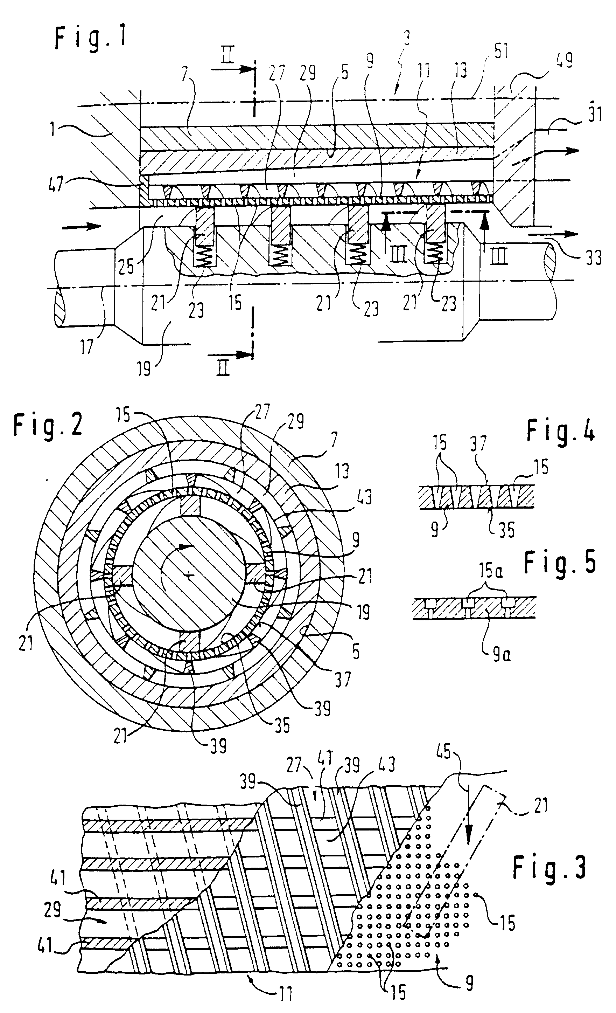

Zunächst soll an Hand der Fig. 1 bis 5 das grundprinzip einer Trennvorrichtung erläutert werden, bei welcher sich die Erfindung verwirklichen läßt.

Fig. 1 zeigt eine Trennvorrichtung zur Wiederaufbereitung von Gemischen aus thermoplastischen Kunststoff- und Materialabfällen mit höherem Schmelzpunkt, insbesondere Metallabfällen, insbesondere Kupfer- oder Aluminiumabfällen, wie sie z.B. in der Verpackungs- und Kabelindustrie anfallen. An einer Maschinenbasis 1 ist ein allgemein mit 3 bezeichneter Filterkopf befestigt, der in einer hohlzylindrischen Kammer 5 eines Gehäuserohrs 7 einen rohrförmigen, hohlzylindrischen Filterkörper 9 enthält. Der Filterkörper 9 sitzt in einem nachfolgend noch näher erläuterten Stützrohr 11, das sich seinerseits über eine Hülse 13 am Innenmantel 5 des Gehäuserohrs 7 abstützt. In dem mit einer Vielzahl radialer Filterlöcher 15 versehenen Filterkörper 9 ist gleichachsig zu dem Filterkörper 9 eine um ihre Achse 17 rotierend angetriebenen Schaberwelle 19 angeordnet, die an ihrem Umfang mehrere, schräg zur Achsrichtung verlaufende und sich zu einer Schneckenwendel ergänzende Schaber 21 trägt. Die Schaber 21 sind an der Schaberwelle 19 radial beweglich geführt und werden von Federn 23 gegen den Innenmantel des Filterkörpers 9 vorgespannt.

Das zu reinigende thermoplastische Kunststoffmaterial wird in plastifizierter Form unter Druck in einen zwischen der Schaberwelle 19 und dem Filterkörper 9 verbliebenen Ringraum 25 kontinuierlich eingeführt. Das plastifizierte Kunststoffmaterial wird hierbei durch die Filterlöcher 15 des Filterkörpers 9 nach radial außen gepreßt, wo es über schraubenlinienförmige, den Filterkörper 9 umschließende innere Nuten 27 des Stützrohrs 11 und axial verlaufende Nuten 29 des Stützrohrs 11 zu einem Materialauslaß 31 fließen kann. Das von dem Filterkörper 9 zurückgehaltene Abfallmaterial wird von den Schabern 21 abgestreift und durch die Rotation der Schaberwelle 19 zu einem dem Auslaßende axial gegenüberliegenden zweiten Materialauslaß längs des Filterkörpers 9 transportiert. Der Materialauslaß 33 hat einen verengten Querschnitt und damit Rückstaueigenschaften, die es erlauben, in dem Filterkörper 9 einen erhöhten Materialdruck aufzubauen.

Der Filterkörper 9 hat einen, bis auf seine Filteröffnungen 15, glattflächig kreiszylindrischen Innenmantel 35, an welchem die Schaber 21 entlangstreifen und einen ebenfalls glattflächig kreiszylindrischen Außenmantel 37, an dem schraubenlinienförmig verlaufende, die inneren Nuten 27 zwischen sich begrenzende Rippen 39 anliegen. Die Rippen 39 sind in Form einer mehrgängigen Wendel angeordnet; es kann jedoch auch eine lediglich eingängige Wendel vorgesehen sein. Wie am besten die Fig. 2 und 3 zeigen, sind die axial verlaufenden äußeren Nuten 29 durch axial verlaufende Rippen 41 begrenzt. Die Summe der Nuttiefen der inneren und äußeren Nuten 27, 29 ist an jeder Stelle des Stützrohrs 13 größer als dessen Wandstärke, so daß die inneren und äußeren Nuten 27, 29 zwischen den Rippen 39 und 41 unter Bildung von radialen Durchlässen 43 ineinander übergehen. Die Rippen 39, 41 haben, ebenso wie die Nuten 27, 29, Trapezquerschnitt und verjüngen sich nach radial innen bzw. radial außen, während sich die Nuten nach radial innen bzw. radial außen erweitern. Auf diese Weise wird eine besonders geringe Auflagefläche der inneren Rippen 39 am Filterkörper 9 erreicht bei optimalem Strömungsquerschnitt für das gereinigte Kunststoffmaterial.

Da die inneren Nuten 27 und damit die inneren Rippen 39 aufgrund der Schraubenlinienform schräg zur Umfangsrichtung und damit der bei 45 in Fig. 3 angedeuteten Bewegungsrichtung der Schaber 21 verlaufen, verändern sich die momentanen Stützbereiche der Rippen 39, die die Reaktionskräfte der Schaber 21 aufnehmen, im Verlauf der Schaberbewegung längs deren gesamter Abmessung. Nicht nur die Schaber 21, sondern auch der Innenmantel 35 des Filterkörpers 9 wird damit gleichmäßig abgenutzt.

Die Filterlöcher 15 sind, wie am besten Fig. 3 zeigt, in einem zweidimensionalen, äquidistanten Raster angeordnet, bei welchem beide Rasterrichtungen, die hier in axialer Richtung und in Umfangsrichtung des Filterkörpers 9 verlaufen, quer zur Richtung der inneren Nuten 27 verlaufen. Auf diese Weise wird eine optimale Überdeckung der Filterlöcher 15 durch die inneren Nuten 27 erreicht. Fig. 3 zeigt ferner, daß jede innere Nut 27 mehrere Filterlöcher innerhalb ihrer Nutbreite enthält.

Wie Fig. 4 zeigt, erweitern sich die Filterlöcher 15 vom Innenmantel 35 zum Außenmantel 37 hin konisch. Die Filterlöcher 15, die im Bereich des Innenmantels 35 einen Lochdurchmesser zwischen 130 und 200 µm haben, erlauben auf diese Weise eine Wandstärke des rohrförmigen Filterkörpers 9 zwischen 3 und 6 mm, was in Verbindung mit dem vorstehend erläuterten, die Rippen 39, 41 integral miteinander verbindenden Stützrohr 11 eine mechanisch stabile Filterkonstruktion erlaubt, die trotz hohem Materialdruck und hoher Anpreßkräfte der Schaber 21 nicht zum Verbeulen des Filterkörpers 9 neigt.

Die äußeren Nuten 29 erweitern sich zum Auslaß 31 hin in axialer Richtung. Das Stützrohr 11 ist hierzu an seinem Außenmantel konisch und sitzt in einem Innenkonus der Hülse 13. Die Verwendung der innen konischen Hülse 13 vereinfacht die Herstellung des Trennkopfes 3 und erlaubt die axiale Justierung des Stützrohrs 11 relativ zum Filterkörper 9.

An seinem einlaßseitigen Ende trägt der Filterkörper 9 einen radial nach außen abstehenden Flansch 47 (Fig. 1), über den der Filterkörper 9 drehfest an der Gehäusebasis 1 fixiert ist. Auf diese Weise kann ein von den Schabern 21 in den Filterkörper 9 eingeleitetes Drehmoment an der Gehäusebasis 1 abgestützt werden. Die Fixierung erfolgt zweckmäßigerweise im Klemmsitz, wobei der Flansch 47 zwischen der Gehäusebasis 1 und dem benachbarten Stirnende des Stützrohrs 11 axial eingeklemmt wird. Die Spannkräfte erzeugt ein auf das andere Ende des Stützrohrs 11 wirkender Spannring 49, der über bei 51 angedeutete Spannelemente mit der Gehäusebasis 1 verspannt ist. Die Fixierungsmittel der Hülse 13 sind nicht näher dargestellt.

Fig. 5 zeigt eine Variante eines Filterkörpers 9a, der sich von dem vorstehend erläuterten Filterköper 9 lediglich durch die Form seiner Filterlöcher 15a unterscheidet. Die Filterlöcher sind als Stufenlöcher ausgebildet und haben zum Inneren des Filterkörpers hin einen sich stufenförmig verengenden Lochquerschnitt.

In beiden Varianten hat der Filterkörper eine Wandstärke zwischen 3 bis 6 mm, während die Filterlöcher an ihrer engsten Stelle einen Lochquerschnitt von etwa 130 bis 200 µm haben.

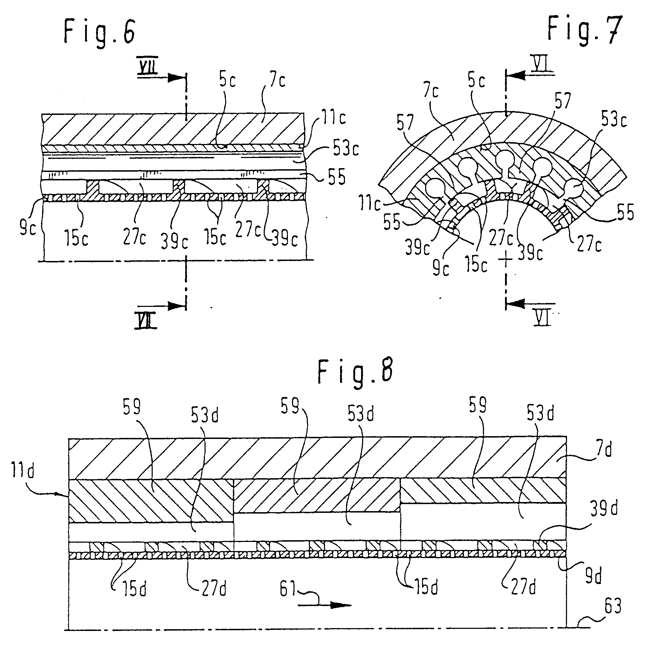

Die Figuren 6 und 7 zeigen Einzelheiten einer erfindungsgemäßen Trennvorrichtung, die sich von den vorstehend erläuterten Trennvorrichtungen dadurch unterscheidet, daß die den Filterkörper 9c am Stützrohr 11c abstützenden Rippen 39c integral an dem Trennkörper 9c angeformt sind. Die Rippen 39c verlaufen wiederum im wesentlichen in Umfangsrichtung und vorzugsweise schraubenwendelförmig um den ansonsten rohrförmigen Filterkörper 9c herum und begrenzen zwischen sich gleichfalls etwa in Umfangsrichtung verlaufende Nuten 27c. Das Stützrohr 11c enthält in seiner Wand in Umfangsrichtung verteilt eine Vielzahl axialer Bohrungen 53c, die nach radial innen hin in axial verlaufende, zum Innenmantel des Stützrohrs 11c sich öffnende Schlitze 55 übergehen. Die Schlitze, die sich im wesentlichen über die gesamte Länge der Bohrungen 53c erstrecken haben in Umfangsrichtung eine Breite und in radialer Richtung eine Tiefe, die kleiner ist als der Durchmesser der Bohrungen 53c. Damit verbleiben zwischen in Umfangsrichtung benachbarten Schlitzen 55 vergleichsweise breite Fußbereiche 57 für die radiale Abstützung der Rippen 39c des Filterkörpers 9c. Das Stützrohr 11c hat einen glattflächigen, zylindrischen Außenmantel, mit dem es seinerseits am Innenmantel 5c des Gehäuserohrs 7c abgestützt ist. Auch in dieser Ausführungsform haben die bei 15c angedeuteten Filterlöcher des Filterkörpers 9c zweckmäßigerweise ein nach radial außen hin sich erweiternde Form.

Die Bohrungen 53c können konisch sich erweiternden Querschnitt haben. Da ein solcher Querschnitt erhöhten Herstellungsaufwand erfordert, kann analog zu der in Figur 8 dargestellten Variante der Trennvorrichtung aus Fig. 1 vorgesehen sein, daß zumindest das Stützrohr 11d aus mehreren axial aneinander anschließenden Rohrabschnitten 59 besteht, von denen jedes für sich genommen axial gleichbleibende Querschnittsgestaltung hat, während der Durchmesser der Bohrungen 53d in Materialabflußrichtung 61 von Abschnitt zu Abschnitt zunimmt. Die Rohrabschnitten 59 haben gleichen Innendurchmesser und gleichen Außendurchmesser, während der lichte Abstand der Bohrungen 53d vom Zentrum 63 jedes Rohrabschnitts gleich bleibt. Auf diese Weise ist der radiale Abstand jeder Bohrung 53d vom Innenmantel des Stützrohrs 11d gleich für jeden Rohrabschnitt 59. Die Rohrabschnitte 59 sitzen gemeinsam in einen Gehäuserohr 7d und stützen gemeinsam einen axial durchgehenden Filterkörper 9d. Im gegensatz zu Fig. 8 erfolgt bei Anwendung dieser Idee bei einer erfindungsgemäßen Trennvorrichtung die radiale Abstützung des Filterkörpers 9d an den Rohrabschnitten 59 in der anhand der Figuren 6 und 7 erläuterten Weise.

Es versteht sich, daß gegebenenfalls auch das Gehäuserohr 7d und der Filterkörper 9d entsprechend den Rohrabschnitten 59 axial geteilt sein kann. Bei sämtlichen der vorstehend anhand der Figuren 6 bis 8 erläuterten Varianten kann das Stützrohr gegebenenfalls integraler Bestandsteil des Gehäuserohrs sein.

Es versteht sich ferner, daß auch die Varianten der Figuren 6 bis 8 eine Schaberwelle der anhand der Figuren 1 bis 4 erläuterten Art umfassen.

## Patentansprüche

1. Trennvorrichtung zum Trennen von Materialien unterschiedlicher Konsistenz, insbesondere zum Trennen von Thermoplastkunststoff-Feststoff-Gemischen oder Gemischen aus unterschiedlich schmelzbaren Kunststoffen, umfassend:
- ein Gehäuse (1, 7c),
- einen in einer angenähert zylindrischen Kammer (5c) des Gehäuses (1, 7c) angeordneten hohlzylindrischen Filterkörper (9c) aus einem rohrförmigen Materialstück mit den Filterkörper (9c) radial durchdringenden Filterlöchern (15c),
- einer in dem Gehäuse (1, 7c) gelagerten, gleichachsig zum Filterkörper (9c) drehend angetriebenen Schaberwelle (19), welche den Filterkörper (9c) unter Bildung eines Ringraums (25) axial durchsetzt und an ihrem Mantel wenigstens einen zum Filterkörper (9c) radial vorstehenden, federnd an dem Filterkörper (9c) anliegenden Schaber (21) trägt,
- eine das Materialgemisch unter Druck in den Ringraum (25) einführende Fördereinrichtung,
- den Filterkörper (9c) umschiießende Stützmittel (11c), die den Filterkörper (9c) über Stützrippen (39c) radial abstützen und die eine Vielzahl über den Umfang des Filterkörpers (9c) verteilte, angenähert axial verlaufende, erste Kanalabschnitte (53c) sowie zwischen den Stützrippen (39c) gelegene, quer zu den ersten Kanalabschnitten (53c) verlaufende zweite Kanalabschnitte (27c) bilden, wobei die Stützrippen (39c) einstückig an dem Filterkörper (9c) angeformt sind und die ersten Kanalabschnitte (53c) in einem Stützrohr (11c) vorgesehen sind, in welchem der Filterkörper (9c) koaxial sitzt,
- einen über die ersten (53c) und die zweiten (27c) Kanalabschnitte mit der Außenseite des Filterkörpers (9c) verbundenen, ersten Materialauslaß (31), und
- einen mit der Innenseite des Filterkörpers (9c) verbundenen, zweiten Materialauslaß (33) mit Rückstaueigenschaft,
dadurch gekennzeichnet,
daß die ersten Kanalabschnitte durch im wesentlichen axiale, in der Wand des Stützrohrs (11c) verlaufende Bohrungen (53c) gebildet sind, von denen jede durch einen längs der Bohrung (53c) sich erstreckenden Schlitz (55) mit der Innenseite des Stützrohrs (11c) verbunden ist und daß der Durchmesser jeder Bohrung (53c) größer als die Breite des zugehörigen Schlitzes (55) ist.

2. Trennvorrichtung nach Anspruch 1,
dadurch gekennzeichnet,
daß sich die Filterlöcher (15c) vom Inneren des Filterkörpers (9c) her nach außen erweitern, insbesondere konisch oder stufenförmig erweitern.

3. Trennvorrichtung nach Anspruch 1 oder 2,
dadurch gekennzeichnet,
daß die zweiten Kanalabschnitte (27c) in Form wenigstens einer Schraubenwendel angeordnet sind.

4. Trennvorrichtung nach einem der Ansprüche 1 bis 3,
dadurch gekennzeichnet,
daß das Stützrohr (11d) aus mehreren gleichachsig hintereinander angeordneten, von einander separierbaren Rohrabschnitten (59) mit gleichem Innendurchmesser zusammengesetzt ist, und daß sich die ersten Kanalabschnitte (53d) durch die Rohrabschnitte (59) hindurcherstrecken und in den einzelnen Rohrabschnitten (59) eine längs des Rohrabschnitts (59) im wesentlichen gleichbleibende, von Rohrabschnitt (59) zu Rohrabschnitt (59) zum ersten Materialauslaß (31) hin jedoch zunehmende Querschnittsfläche haben.

5. Trennvorrichtung nach Anspruch 4,
dadurch gekennzeichnet,
daß die ersten Kanalabschnitte (53d) als Bohrungen ausgebildet sind, deren Durchmesser von Rohrabschnitt (59) zu Rohrabschnitt (59) zum ersten Materialauslaß (31) zunimmt.

6. Trennvorrichtung nach Anspruch 5,
dadurch gekennzeichnet,
daß die Bohrungen (53d) benachbarter Rohrabschnitte (59) gegeneinander radial versetzt sind und im wesentlichen gleichen lichten Abstand vom Zentrum (61) des Stützrohrs (11d) haben.

7. Trennvorrichtung nach einem der Ansprüche 1 bis 6,
dadurch gekennzeichnet,
daß der Filterkörper (9) an einem Ende, insbesondere am Materialzuführende, einen radial nach außen abstehenden Flansch (47) aufweist mit dem er drehfest am Gehäuse (1, 7) fixiert ist.

8. Trennvorrichtung nach Anspruch 7,
dadurch gekennzeichnet,
daß der Flansch (47) in Klemmsitz zwischen einem Gehäuseteil (1) und dem Stützrohr (11) eingespannt ist.

## Claims

1. A separating apparatus for separating materials of different consistency, particularly for separating synthetic thermoplastics-solids mixtures or mixtures of synthetic plastics which have different melting properties, comprising:
- a housing (1, 7c)
- a hollow cylindrical filter body (9c) consisting of a tubular piece of material with filter holes (15c) passing radially through the filter body (9c) and disposed in an approximately cylindrical chamber (5c) in the housing (1, 7c),
- a scraper shaft (19) mounted in the housing (1, 7c) and driven to rotate in the same axis as the filter body (9c) and which passes axially through the filter body (9c), forming an annular space (25) and carrying on its shell at least one scraper (21) bearing resiliently on the filter body (9c) and projecting radially in respect of the filter body (9c);
- a conveyor means introducing the material mixture into the annular space (25) under pressure,
- enclosing the filter body (9c), bracing means (11c) which radially brace the filter body (9c) through bracing ribs (39c) and which form a plurality of approximately axially extending first channel portions (53c) distributed over the periphery of the the filter body (9c) and second channel portions (27c) situated between the bracing ribs (39c) and extending crosswise to the first channel portions (53c), the bracing ribs (39c) being integrally formed on the filter body (9c) and the first channel portions (53c) being provided in a bracing tube (11c) in which the filter body (9c) is coaxially seated,
- a first material outlet (31) connected to the outside of the filter body (9c) via the first (53c) and second (27c) channel portions, and
- a second material outlet (33) with reflux facility and connected to the inside of the filter body (9c),
characterised in that the first channel portions are formed by substantially axial bores (53c) extending in the wall of the bracing tube (11c) and each of which is connected to the inside of the bracing tube (11c) by a slot (55) extending the length of the bore (53c) and in that the diameter of each bore (53c) is greater than the width of the associated slot (55).

2. A separating apparatus according to claim 1, characterised in that the filter holes (15c) widen out from the inside of the filter body (9c), the widening being in particular conical or step-like.

3. A separating apparatus according to claim 1 or 2, characterised in that the second channel portions (27c) are disposed in the form of at least one helix.

4. A separating apparatus according to one of claims 1 to 3, characterised in that the bracing tube (11d) is composed of a plurality of equi-axially and serially disposed tube portions (59) having the same inside diameter and separable from one another and in that the first channel portions (53d) extend through the tube portions (59) and in that in the individual tube portions (59), the cross-sectional area remains substantially constant along the tube portion (59) but does however increase from tube portion (59) to tube portion (59) in the direction of the first material outlet (31).

5. A separating apparatus according to claim 4, characterised in that the first channel portions (53d) are constructed as bores the diameter of which increases from tube portion (59) to tube portion (59) in the direction of the first material outlet (31).

6. A separating apparatus according to claim 5, characterised in that the bores (53d) of adjacent tube portions (59) are radially offset in respect of one another and are at substantially the same clear distance from the centre (61) of the bracing tube (11d).

7. A separating apparatus according to one of claims 1 to 6, characterised in that at one end, particularly the material feeding end, the filter body (9) has a radially outwardly projecting flange (47) by which it is rotationally rigidly fixed to the housing (1, 7).

8. A separating apparatus according to claim 7, characterised in that the flange (47) is fixed by being clamped between a housing part (1) and the bracing tube (11).

## Revendications

1. Dispositif de séparation pour la séparation de matériaux de consistance différente, en particulier pour la séparation de mélanges de matières thermoplastiques et de matières solides ou de mélanges de matières plastiques différemment fusibles, comportant
- un carter (1, 7c),
- un corps filtrant (9c) cylindrique creux, placé dans une chambre (5c) approximativement cylindrique du carter (1, 7c), fait d'une pièce tubulaire avec des trous de filtrage (15c), traversant radialement le corps filtrant (9c),
- un arbre de raclage (19) monté dans le carter (1, 7c), entraîné en rotation sur le même axe que le corps filtrant (9c), qui traverse axialement le corps filtrant (9c) en formant un espace annulaire (25) et qui porte, sur son enveloppe, au moins un racloir (21) dépassant radialement vers le corps filtrant (9c), s'appliquant élastiquement contre le corps filtrant (9c),
- un dispositif de convoyage introduisant le mélange de matières sous pression dans l'espace annulaire (25),
- des moyens d'appui (11c), entourant le corps filtrant (9c), qui soutiennent radialement le corps filtrant (9c), par des nervures d'appui (39c), et qui forment un grand nombre de premiers tronçons de canaux (53c), répartis sur le pourtour du corps filtrant (9c), s'étendant approximativement axialement ainsi que des deuxièmes tronçons de canaux (27c), situés entre les nervures d'appui (39c), s'étendant transversalement aux premiers tronçons de canaux (53c), les nervures d'appui (39c) étant formées d'un seul tenant sur le corps filtrant (9c) et les premiers tronçons de canaux (53c) étant prévus dans un tube d'appui (11c), dans lequel le corps filtrant (9c) est logé coaxialement,
- une première sortie de matière (31), reliée par les premiers (53c) et les deuxièmes (27c) tronçons de canaux avec le côté extérieur du corps filtrant (9c), et
- une deuxième sortie de matière (33), reliée au côté intérieur du corps filtrant (9c), avec propriété de retenue,
caractérisé
en ce que les premiers tronçons de canaux sont formés par des perçages (53c) sensiblement axiaux, s'étendant dans la paroi du tube d'appui (11c), dont chacun est relié au côté intérieur du tube d'appui (11c), par une fente (55), s'étendant le long du perçage (53c), et en ce que le diamètre de chaque perçage (53c) est supérieur à la largeur de la fente (55) correspondante.

2. Dispositif de séparation selon la revendication 1,
caractérisé
en ce que les trous de filtrage (15c) s'élargissent à partir de l'intérieur du corps filtrant (9c) vers l'extérieur, s'élargissant en particulier coniquement ou en forme de gradins.

3. Dispositif de séparation selon la revendication 1 ou 2,
caractérisé
en ce que les deuxièmes tronçons de canaux (27c) sont disposés sous la forme d'au moins une hélice.

4. Dispositif de séparation selon l'une des revendications 1 à 3,
caractérisé
en ce que le tube d'appui (11d) est composé de plusieurs tronçons de tube (59) de même diamètre intérieur, disposés sur le même axe l'un derrière l'autre, séparables les uns des autres, et en ce que les premiers tronçons de canaux (53d) s'étendant à travers les tronçons de tube (59) et possèdent, dans les différents tronçons de tube (59), une surface de section transversale sensiblement constante le long de la portion de tube (59), mais augmentent d'un tronçon de tube (59) à l'autre vers la première sortie de matière (31).

5. Dispositif de séparation selon la revendication 4,
caractérisé
en ce que les premiers tronçons de canaux (53d) sont conformés en perçages, dont le diamètre augmente d'un tronçon de tube (59) à l'autre, vers la première sortie de matière (31).

6. Dispositif de séparation selon la revendication 5,
caractérisé
en ce que les perçages (53d) de tronçons de tube (59) voisins sont décalés radialement les uns par rapport aux autres et ont sensiblement le même écartement par rapport au centre (61) du tube d'appui (11d).

7. Dispositif de séparation selon l'une des revendications 1 à 6,
caractérisé
en ce que le corps filtrant (9) présente, à une extrémité, en particulier à l'extrémité d'arrivée des matières, une bride (47) faisant saillie radialement vers l'extérieur, avec laquelle il est fixé solidairement en rotation sur le carter (1, 7).

8. Dispositif de séparation selon la revendication 7,
caractérisé
en ce que la bride (47) est ajustée serrée entre une partie de carter (1) et le tube d'appui (11).
